# EUROPEAN PATENT APPLICATION

(11) **EP 4 848 137 A1**
(43) Date of publication of application: **02.12.2026**
(21) Application number: 25744778.9
(22) Date of filing: 16.01.2025
(51) Int. Cl.: G06F 40/40, G06N 3/04, G06F 40/226, G06F 40/284

(54) **INFORMATION DETECTION METHOD AND SYSTEM, AND ELECTRONIC DEVICE**

(30) Priority: 23.01.2024 CN 202410099131
(71) Applicant: Alibaba Innovation Private Limited, Singapore 189554 (SG)
(72) Inventor: CHEN, Chao, Hangzhou City, Zhejiang 310030 (CN); LIU, Kai, Hangzhou City, Zhejiang 310030 (CN); CHEN, Ze, Hangzhou City, Zhejiang 310030 (CN); GU, Yi, Hangzhou Zhejiang 311121 (CN); WU, Yue, Hangzhou City, Zhejiang 310030 (CN); TAO, Mingyuan, Hangzhou City, Zhejiang 310030 (CN); FU, Zhihang, Hangzhou City, Zhejiang 310030 (CN); YE, Jieping, Hangzhou City, Zhejiang 310030 (CN)
(74) Representative: Novagraaf Technologies
(86) International application number: PCT/IB2025/050473
(87) International publication number: WO 2025/158246

(57) **Abstract**

Provided are an information detection method, an information detection system, and an electronic device. The information generation method includes: input information is monitored; the input information is input into a dialogue model for analysis, to obtain at least one piece of response information matching the input information; a target text feature of the response information is acquired from internal states of the dialogue model, where the internal states are used for representing rules for analyzing, by the dialogue model, the input information, and the target text feature is used for representing semantics of the response information; and a detection result of the response information is determined based on the target text feature of the response information, where the detection result is used for representing whether the response information output by the dialogue model is reliable.

## Description

### CROSS-REFERENCE TO RELATED APPLICATIONS

The present disclosure claims priority to a Chinese Patent Application No. 202410099131.3, filed on January 23, 2024, with the China National Intellectual Property Administration, and titled "Information Detection Method, System, and Electronic Device", the entire contents of which are incorporated herein by reference.

### TECHNICAL FIELD

The present disclosure relates to the technical field of large model technology and large language model detection, and more particularly, to an information detection method, an information detection system, and an electronic device.

### BACKGROUND

Currently, with rapid development of a large model, requirements for authenticity and reliability of response information output by the large model are continuously increasing, and how to detect whether the response information output by the large model is reliable has become particularly important.

In a related art, a hallucination detection method based on Perplexity or a hallucination detection method based on SelfCheckGPT is typically used for determining whether the response information output by the large model is reliable. The hallucination detection method based on the Perplexity mainly determines uncertainty of each character in the response information output by the large model character by character, and then multiplies the uncertainty of each character, to obtain the uncertainty of the response information output by the large model. However, due to inaccurate estimation of the uncertainty for sentence length of the response information output by the large model, and diversity of expression forms of sentences in the response information output by the large model, a detection result of the reliability of the response information output by the large model is inaccurate.

Therefore, the described methods have a technical problem of being unable to effectively detect the response information.

No effective solution has been proposed for the problem at present.

### SUMMARY

Embodiments of the present disclosure provide an information detection method, an information detection system, and an electronic device, so as to at least solve the technical problem of being unable to effectively detect the reliability of response information.

According to one aspect of the embodiments of the present disclosure, the information detection method is provided. The information detection method includes: input information is monitored; the input information is input into a dialogue model for analysis, to obtain at least one piece of response information matching the input information; a target text feature of the response information is acquired from internal states of the dialogue model, where the internal states are used for representing rules for analyzing, by the dialogue model, the input information, and the target text feature is used for representing semantics of the response information; and a detection result of the response information is determined based on the target text feature of the response information, where the detection result is used for representing whether the response information output by the dialogue model is reliable.

According to another aspect of the embodiments of the present disclosure, an information generation method is further provided, which is applied to a question-answering system deployed in a scenario task. The information detection method includes: input information in the scenario task is monitored on an operation interface of the question-answering system; a dialogue model matching the scenario task is invoked, and the input information is input into the dialogue model for analysis, to obtain at least one piece of response information matching the input information; a target text feature of the response information is acquired from internal states of the dialogue model, where the internal states are used for representing rules for analyzing, by the dialogue model, the input information, and the target text feature is used for representing semantics of the response information in the scenario task; a detection result of the response information is determined based on the target text feature of the response information; in response to the detection result indicating that the response information output by the dialogue model is reliable in the scenario task, the response information is output; and in response to the detection result indicating that the response information output by the dialogue model is unreliable in the scenario task, prompt information corresponding to the detection result is output.

According to another aspect of the embodiments of the present disclosure, an information detection method is further provided. The information detection method includes: input information is monitored on a dialogue interface; at least one piece of response information matching the input information is displayed on the dialogue interface, where the response information is obtained by analyzing the input information using a dialogue model; and in response to an information detection operation acting on the dialogue interface, a detection result of the response information is displayed on the dialogue interface, where the detection result is used for representing whether the response information output by the dialogue model is reliable, the detection result is determined based on a target text feature of the response information, the target text feature is used for representing semantics of the response information, the target text feature is acquired from internal states of the dialogue model, and the internal states are used for representing rules for analyzing, by the dialogue model, the input information.

According to one aspect of the embodiments of the present disclosure, an information detection apparatus is provided. The apparatus includes: a first monitoring component, configured to monitor input information; a first analysis component, configured to input the input information into a dialogue model for analysis, to obtain at least one piece of response information matching the input information; a first acquisition component, configured to acquire, from internal states of the dialogue model, a target text feature of the response information, where the internal states are used for representing rules for analyzing, by the dialogue model, the input information, and the target text feature is used for representing semantics of the response information; and a first determination component, configured to determine a detection result of the response information based on the target text feature of the response information, where the detection result is used for representing whether the response information output by the dialogue model is reliable.

According to another aspect of the embodiments of the present disclosure, an information generation apparatus is further provided. The apparatus includes: a second monitoring component, configured to monitor input information in a scenario task on an operation interface of a question-answering system; a second analysis component, configured to invoke a dialogue model matching the scenario task, and input the input information into the dialogue model for analysis, to obtain at least one piece of response information matching the input information; a second acquisition component, configured to acquire, from internal states of the dialogue model, a target text feature of the response information, where the internal states are used for representing rules for analyzing, by the dialogue model, the input information, and the target text feature is used for representing semantics of the response information in the scenario task; a second determination component, configured to determine a detection result of the response information based on the target text feature of the response information; a first output component, configured to, in response to the detection result indicating that the response information output by the dialogue model is reliable in the scenario task, output the response information; and a second output component, configured to, in response to the detection result indicating that the response information output by the dialogue model is unreliable in the scenario task, output corresponding prompt information.

According to another aspect of the embodiments of the present disclosure, an information detection apparatus is further provided. The apparatus includes: a third monitoring component, configured to monitor input information on a dialogue interface; a first display component, configured to display, on the dialogue interface, at least one piece of response information matching the input information, where the response information is obtained by analyzing the input information using internal states of a dialogue model; and a second display component, configured to, in response to an information detection operation acting on the dialogue interface, display a detection result of the response information on the dialogue interface, where the detection result is used for representing whether the response information output by the dialogue model is reliable, the detection result is determined based on a target text feature of the response information, the target text feature is used for representing semantics of the response information, the target text feature is acquired from the internal states of the dialogue model, and the internal states are used for representing rules for analyzing, by the dialogue model, the input information.

According to another aspect of the embodiments of the present disclosure, an information detection system is further provided. The system includes: an information input terminal, configured to monitor input information; an information detection terminal, configured to input the input information into a dialogue model for analysis, to obtain at least one piece of response information matching the input information, acquire, from internal states of the dialogue model, a target text feature of the response information, where the internal states are used for representing rules for analyzing, by the dialogue model, the input information, and the target text feature is used for representing semantics of the response information, and determine, based on the target text feature of the response information, a detection result of the response information, where the detection result is used for representing whether the response information output by the dialogue model is reliable; and an information output terminal, configured to, in response to the detection result indicating that the response information output by the dialogue model is reliable, output the response information, and in response to the detection result indicating that the response information output by the dialogue model is unreliable, output corresponding prompt information.

According to another aspect of the embodiments of the present disclosure, an electronic device is further provided, including a memory and a processor, where the memory is configured to store computer-executable instructions, the processor is configured to execute the computer-executable instructions to implement the steps of the information detection method.

According to another aspect of the embodiments of the present disclosure, a computer-readable storage medium is further provided, where the computer-readable storage medium stores a program, and when the program is executed by a processor, a device in which the computer-readable storage medium is located is controlled to perform the steps of the information detection method.

According to another aspect of the embodiments of the present disclosure, a computer program is further provided, where when the computer program is executed by a processor, the information detection method according to the embodiments of the present disclosure is performed.

According to another aspect of the embodiments of the present disclosure, a computer program product is further provided, including a non-transitory computer-readable storage medium, where the non-transitory computer-readable storage medium stores a computer program, and when the computer program is executed by a processor, the information detection method according to the embodiments of the present disclosure is performed.

According to another aspect of the embodiments of the present disclosure, a computer program product is further provided, where when the computer program product is executed by a processor, the information detection method according to the embodiments of the present disclosure is implemented.

In the embodiments of the present disclosure, input information is monitored; the input information is input into a dialogue model for analysis, to obtain at least one piece of response information matching the input information; a target text feature of the response information is acquired from internal states of the dialogue model, where the internal states are used for representing rules for analyzing, by the dialogue model, the input information, and the target text feature is used for representing semantics of the response information; and a detection result of the response information is determined based on the target text feature of the response information, where the detection result is used for representing whether the response information output by the dialogue model is reliable. In other words, in the present disclosure, by analyzing the input information based on the dialogue model, at least one piece of response information matching the input information is obtained. Since the internal states of the dialogue model are used for representing the rules for analyzing, by the dialogue model, the input information, the target text feature of the response information is acquired from the internal states of the dialogue model, so as to better mine and utilize the semantic features of the response information. The detection result of the response information is determined using the target text feature, and the detection result represents an overall degree of uncertainty of the response information, in other words, reflect whether the response information output by the dialogue model is reliable, thereby a technical effect of effectively detecting the reliability of the response information output by the dialogue model is achieved, and the technical problem of being unable to effectively detect the reliability of the response information is further solved.

It should be noted that the foregoing general description and the following detailed description are merely exemplary and explanatory of the present disclosure, and do not constitute a limitation on the present disclosure.

### BRIEF DESCRIPTION OF THE DRAWINGS

The accompanying drawings described herein are used for providing a further understanding of the present disclosure and constitute a part of the present disclosure. The illustrative embodiments of the present disclosure and the descriptions thereof are used for explaining the present disclosure and do not constitute an improper limitation on the present disclosure. In the drawings:
FIG. 1 is a schematic diagram of an application scenario of an information detection method according to some embodiments of the present disclosure;
FIG. 2 is a flowchart of an information detection method according to some embodiments of the present disclosure;
FIG. 3 is a flowchart of an information generation method according to some embodiments of the present disclosure;
FIG. 4 is a flowchart of another information detection method according to some embodiments of the present disclosure;
FIG. 5 is a schematic diagram of an information detection system according to some embodiments of the present disclosure;
FIG. 6 is a flowchart of another information detection method according to some embodiments of the present disclosure;
FIG. 7 is a schematic diagram of feature response of a text feature set according to some embodiments of the present disclosure;
FIG. 8 is a schematic diagram of large model knowledge hallucination detection according to some embodiments of the present disclosure;
FIG. 9 is a schematic diagram of an information detection apparatus according to some embodiments of the present disclosure;
FIG. 10 is a schematic diagram of an information generation apparatus according to some embodiments of the present disclosure;
FIG. 11 is a schematic diagram of another information detection apparatus according to some embodiments of the present disclosure;
FIG. 12 is a structural block diagram of a computer terminal according to some embodiments of the present disclosure.

### DETAILED DESCRIPTION OF THE PREFERRED EMBODIMENTS

To enable a person having ordinary skill in the art to better understand the solutions of the present disclosure, technical solutions in the embodiments of the present disclosure is described clearly and completely below with reference to the drawings in the embodiments of the present disclosure. Obviously, the described embodiments are merely some embodiments, rather than all of the embodiments of the present disclosure. All other embodiments obtained by the person having ordinary skill in the art without creative effort based on the embodiments of the present disclosure shall fall within a scope of protection of the present disclosure.

It should be noted that the terms "first", "second", and the like in the description, claims of the present disclosure and in the drawings are used for distinguishing similar objects, and are not necessarily used for describing a specific sequence or order. It should be understood that the data so used are interchangeable under appropriate circumstances, so that the embodiments of the present disclosure described herein are practiced in an order other than that illustrated or described herein. In addition, terms "including" and "having", as well as any variations thereof, are intended to cover non-exclusive inclusion. For example, a process, a method, a system, a product, and a device that includes a series of steps or components are not necessarily limited to those steps or components explicitly listed, but includes other steps or components not explicitly listed or inherent to the process, the method, the product, and the device.

The technical solutions provided by the present disclosure are mainly implemented using large model technology. The large model herein refers to a deep learning model having a large scale of model parameters, which typically includes hundreds of millions, tens of billions, hundreds of billions, trillions, or even hundreds of trillions of model parameters or more. The large model is also referred to as a Foundation Model. A pre-trained model is produced through pre-training of the large model on large-scale unlabeled corpora, yielding a pre-trained model with over hundreds of millions of parameters. This pre-trained model is capable of adapting to a wide range of downstream tasks and exhibits strong generalization ability, such as a Large Language Model (LLM), a multi-modal pre-training model, and the like.

It should be noted that in practical applications, the large model is fine-tuned with a small number of samples, enabling the large model to be applied to different tasks. For example, the large model is widely applicable in fields including Natural Language Processing (NLP), computer vision, speech processing, and the like. Specifically, the large model is applied to computer vision tasks including Visual Question Answering (VQA), Image Captioning (IC), image generation, and the like, and is also widely applied to natural language processing tasks including text-based sentiment classification, text summarization generation, machine translation, and the like. Therefore, main application scenarios of the large model include, but are not limited to, digital assistants, intelligent robots, search engines, online education, office software, e-commerce, intelligent design, and the like. In the embodiments of the present disclosure, data processing by a large language model in a knowledge hallucination detection scenario is used as an example for illustration.

First, some nouns or terms that appear in the description of the embodiments of the present disclosure are subject to the following explanations:

The large language model, also referred to as a large-scale language model, is a type of language model represented by a Transformer model with a very large number of parameters (e.g., 1B or more) and good natural language generation capability;

Knowledge hallucination refers to a situation where the large model outputs content that is "inconsistent with facts" or "fabricated", in which case the output of the large model is considered to have the knowledge hallucination;

Internal States of the large model refer to information related to internal weights and features of the large model;

Feature Clipping (FC) refers to clipping abnormal features in a hidden layer of a model;

Token embedding refers to a feature representation corresponding to each different word at an output layer;

Perplexity is a measure of output confidence computed based on an output logit of the large model.

According to some embodiments of the present disclosure, an information detection method is provided. It should be noted that steps illustrated in the flowcharts of the drawings are performed in a computer system such as a set of computer-executable instructions, and although a logical order is shown in the flowcharts, in some cases, the steps illustrated or described are performed in an order different from that described herein.

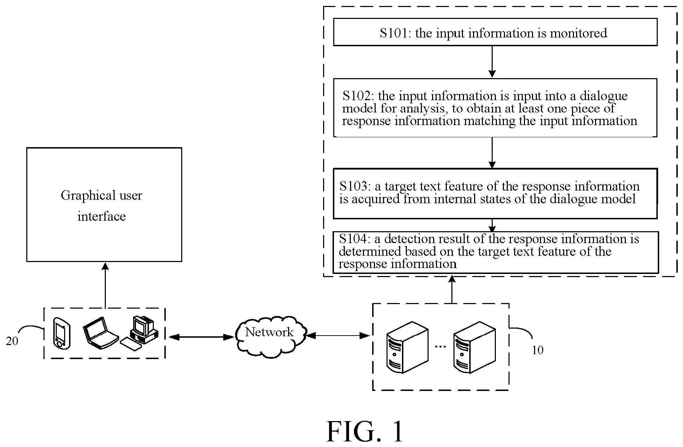

Considering that the model parameters of the large model are massive and computing resources of a mobile terminal are limited, the information detection method provided by the embodiments of the present disclosure is applied to an application scenario as shown in FIG. 1, but is not limited thereto. FIG. 1 is a schematic diagram of an application scenario of an information detection method according to some embodiments of the present disclosure. In the application scenario shown in FIG. 1, the large model is deployed in a server 10. The server 10 is connected to at least one client device 20 through a local area network connection, a wide area network connection, an Internet connection, or other types of data networks. The client device 20 herein include, but are not limited to: a smartphone, a tablet computer, a laptop computer, a personal digital assistant, a personal computer, a smart home device, an in-vehicle device, and the like. The client device 20 interacts with a user through a graphical user interface to invoke the large model, thereby the information detection method provided by the embodiments of the present disclosure is implemented.

In the embodiments of the present disclosure, a system constituted by the client device and the server performs the following steps: the client device receives input information, where the input information is inquiry information, query information, or other types. The server performs the following steps: in step S101, the input information is monitored; in step S102, the input information is input into a dialogue model for analysis, to obtain at least one piece of response information matching the input information; in step S103, a target text feature of the response information is acquired from internal states of the dialogue model; and in step S104, a detection result of the response information is determined based on the target text feature of the response information, where the detection result is used for indicating whether the response information output by the dialogue model is reliable. It should be noted that, when the operating resources of the client device are sufficient to meet deployment and operation conditions of the large model, the embodiments of the present disclosure are performed on the client device. A comparison model used in the present disclosure is a generative dialogue model.

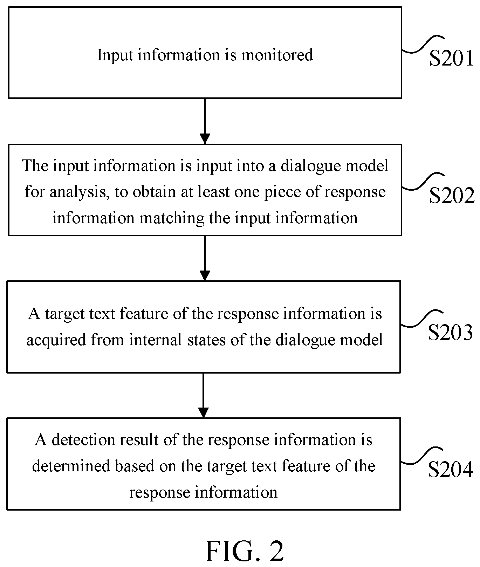

In the operating environment, the present disclosure provides the information detection method as shown in FIG. 2. FIG. 2 is a flowchart of an information detection method according to some embodiments of the present disclosure. As shown in FIG. 2, the information detection method includes the following steps.

In step S201, input information is monitored.

In a technical solution provided by the step S201 of the present disclosure, the input information is multimodal information, and a type of the multimodal information includes at least one of the following: text information including character information, video frame information including frame image information, and audio information. For example, the input information is inquiry information or casual chat information, without specific limitation herein. A question-answering system monitors the input information.

By way of example, taking the input information being the text information as an example, a user inputs multiple text questions to the question-answering system, and the multiple text questions are the input information. The question-answering system monitors the multiple questions in real time, and generates response information corresponding to the multiple questions based on the multiple questions.

It should be noted that when the input information is non-text information, for example, when the input information is the video information or the audio information, the video information or the audio information is converted into the text information for processing.

In step S202, the input information is input into a dialogue model for analysis, to obtain at least one piece of response information matching the input information.

In a technical solution provided by the step S202 of the present disclosure, the dialogue model is a large model capable of understanding and generating natural language text, for example, the generative dialogue model. For example, the dialogue model is a model pre-trained using natural language processing technology and machine learning algorithms, the dialogue model is used for generating dialogue content, answer questions, provide suggestions, and the like. Based on this, after the input information is monitored in the step S201, the input information is input into the dialogue model for analysis, thereby at least one piece of response information matching the input information is obtained. The response information is multimodal information, and a type of the response information includes at least one of the following: text information, image information, video information, and voice information.

In some embodiments, the dialogue model is used for analyzing the input information of the user to generate the at least one piece of response information matching the input information. Based on this, after the question-answering system monitors the input information, the input information is directly input into the dialogue model to analyze the input information by means of the dialogue model, thereby the at least one piece of response information matching the input information is generated.

In step S203, a target text feature of the response information is acquired from internal states of the dialogue model.

In a technical solution provided by the step S203 of the present disclosure, after the at least one piece of response information matching the input information is obtained in the step S202, the target text feature of the response information is acquired from the internal states of the dialogue model. The internal states are used for indicating rules for analyzing, by the dialogue model, the input information, and the target text feature is used for indicating semantics of the response information. For example, the target text feature is a feature of a sentence corresponding to the response information.

In some embodiments, the internal states of the dialogue model include parameters, features, weights, learning rules, and the like of the dialogue model. The internal states of the dialogue model affect a processing manner and a processing result of the dialogue model for the input information. When the input information is processed by the dialogue model, the dialogue model analyzes and reasons about the input information according to the internal states, thereby an output result corresponding to the input information is produced.

By way of example, the internal states of the dialogue model include rules by which multiple network layers in the dialogue model analyze the input information. The multiple network layers of the dialogue model include: a Decoder layer, a fully connected layer (FC Layer), and the like. The multiple network layers perform different processing operations on the input information, to obtain output results, and the target text feature of the response information is acquired from the output results of the multiple network layers.

By way of example, after the multiple network layers in the dialogue model process the input information, the response information matching the input information is obtained. The response information includes multiple characters, and each of the multiple characters corresponds to a feature vector in different network layers of the dialogue model. Since in the large model, a feature of the last character in the generated response information typically represents a feature of the entire response information, based on this, according to an arrangement order of the multiple characters in the response information, a feature vector corresponding to the last character in an intermediate layer among the multiple network layers of the dialogue model is determined, and the intermediate layer feature vector corresponding to the last character among the multiple characters of the response information is determined as the target text feature of the response information. Taking a Large Language Model Meta-7B (llama-7B) as an example, assuming that the llama-7B model includes 33 network layers, after processing the input information with the llama-7B model, a feature of the last character output by the 17th network layer (intermediate layer) is selected as the target text feature of the response information output by the llama-7B model.

In step S204, a detection result of the response information is determined based on the target text feature of the response information.

In a technical solution provided by the step S204 of the present disclosure, after the target text feature of the response information is acquired in the step S203, the detection result of the response information is determined based on the target text feature of the response information, where the detection result is used for indicating whether the response information output by the dialogue model is reliable.

In some embodiments, after the target text feature of the response information is acquired, a covariance matrix is constructed according to the target text feature of the response information, and a metric indicator of the response information output by the dialogue model is calculated based on the covariance matrix. The metric indicator is a hallucination degree metric score corresponding to the response information output by the dialogue model. After the metric indicator is obtained, whether the response information output by the dialogue model is reliable is further determined based on the metric indicator and a metric indicator threshold.

By way of example, assuming that the metric indicator is the hallucination degree metric score corresponding to the response information output by the dialogue model, the metric indicator threshold is a score threshold. In this case, the hallucination degree metric score is compared with the score threshold. When the hallucination degree metric score is greater than the score threshold, it indicates that an output of the dialogue model has hallucination, in other words, the response information output by the dialogue model is unreliable. When the hallucination degree metric score is not greater than the score threshold, it indicates that the output of the dialogue model does not have the hallucination, in other words, the response information output by the dialogue model is reliable.

Based on the steps S201 to S204 of the embodiments, the at least one piece of response information matching the input information is obtained by analyzing the input information based on the dialogue model. Since the internal states of the dialogue model are used for indicating the rules for analyzing, by the dialogue model, the input information, the target text feature of the response information is acquired from the internal states of the dialogue model, thereby the semantic features of the response information are better mined and utilized. The target text feature is used for determining the detection result of the response information. The detection result represents the overall degree of uncertainty of the response information, in other words, reflects whether the response information output by the dialogue model is reliable, the technical effect of effectively performing reliability detection on the response information output by the dialogue model is achieved, thereby the technical problem of being unable to effectively detect the response information obtained from the model output is solved.

The information detection method of some embodiments is further introduced below.

As an optional implementation manner, in step S203, the target text feature corresponding to the response information being acquired from the internal states of the dialogue model, includes: a text feature set of the response information in a network layer of the dialogue model is acquired, where the internal states include the text feature set in the network layer, and the text feature set in the network layer includes text features of text units constituting the response information; and the target text feature is determined from the text feature set in the network layer.

In some embodiments, the dialogue model includes multiple network layers. The multiple network layers respectively output text features of each text unit in the response information. The text features of each text unit constitute the text feature set of the response information in the network layer of the dialogue model. Based on this, the text feature set of the response information in the network layer of the dialogue model is acquired.

By way of example, the text feature set of the response information in the network layer of the dialogue model is represented as Token embedding. The text units of the text features included in the text feature set are represented as tokens. By acquiring the text features of each text unit in the response information output by each network layer of the dialogue model, and combining the text features of each text unit, the text feature set of the response information in each network layer of the dialogue model is obtained.

In some embodiments, the text feature set is directly extracted from the response information output by the network layer of the dialogue model, without using an additional model to extract the text features from the response information output by the dialogue model, thereby computational overhead is saved and computational efficiency is improved.

Optionally, after the text feature set of the response information in each network layer of the dialogue model is determined, the target text feature is determined from the text feature set in the network layer.

As an optional implementation manner, the target text feature being determined from the text feature set in the network layer includes: a text feature corresponding to a target text unit in the response information is determined from the text feature set in the network layer, where the target text unit includes the semantics of the response information; and the text feature corresponding to the target text unit is determined as the target text feature.

In some embodiments, since the text feature set includes the text features of each text unit constituting the response information, where the target text unit includes the semantics of the response information, based on this, the text feature corresponding to the target text unit in the response information is determined from the text feature set in the network layer, and the text feature corresponding to the target text unit is determined as the target text feature.

By way of example, since in the large model, the text feature of the last character of a sentence typically includes the semantic information of the entire sentence, based on this, the last text unit in the response information is determined as the target text unit of the response information, in other words, the last character in the sentence corresponding to the response information is determined as the target text unit of the response information. The text feature corresponding to the last text unit in the arrangement is determined from the text feature set in the network layer, according to an arrangement order of each text unit in the response information, and the text feature corresponding to the last text unit is determined as the text feature corresponding to the target text unit in the response information.

As an optional implementation manner, the text feature set of the response information in the network layer of the dialogue model being acquired includes: a text feature set of the response information in an output network layer of the dialogue model is acquired; and a text feature set in a target hidden network layer corresponding to the text feature set of the output network layer is determined, in the target hidden network layer of the dialogue model.

In some embodiments, the network layers of the dialogue model include the output network layer and the target hidden network layer, and the like. The output network layer is the second-to-last layer among the network layers of the dialogue model, and the target hidden network layer is the intermediate layer among the network layers of the dialogue model.

By way of example, as known from the foregoing introduction, the text feature set is composed of the text features of each text unit constituting the response information. Based on this, the text features of each text unit output by the output network layer of the dialogue model are acquired, and the text features of each text unit are combined to form the text feature set in the output network layer of the dialogue model. The text feature set is referred to as Token embedding.

Optionally, since the target hidden network layer of the dialogue model is the intermediate layer among the multiple network layers of the dialogue model, based on this, the text feature set in the target hidden network layer corresponding to the text feature set in the output network layer is determined in the target hidden network layer of the dialogue model. Next, a process of the text feature set in the target hidden network layer corresponding to the text feature set in the output network layer is determined in the target hidden network layer of the dialogue model is further introduced.

As an optional implementation manner, the text feature set in the target hidden network layer corresponding to the text feature set in the output network layer being determined in the target hidden network layer of the dialogue model includes: the text feature set in the output network layer is updated, to obtain the updated text feature set, where the updated text feature set is free of including noise features; and the text feature set in the target hidden network layer corresponding to the updated text feature set is determined, in the target hidden network layer.

In some embodiments, the text features included in the text feature set in the output network layer have a large number of extreme feature responses, and such extreme feature responses are considered as noise features. For example, some text features in the text feature set have excessively large or excessively small response amplitudes, and this type of text feature easily leads to incorrect a classification result output by the dialogue model. Based on this, after the text feature set in the output network layer of the dialogue model is acquired, the text feature set is updated, to obtain the updated text feature set.

By way of example, the text feature set is updated by adjusting the response amplitudes of the text features included in the text feature set in the output network layer. For example, the text features in the text feature set are adjusted within a response amplitude threshold range according to the response amplitude threshold range corresponding to the text feature set in the output network layer, to update the text feature set in the output network layer.

Optionally, the text feature set is updated by performing a feature clipping operation on the text feature set in the output network layer. For example, the text features with excessively large or excessively small response amplitudes in the text feature set are clipped, to obtain the clipped text feature set, and the clipped text feature set is determined as the updated text feature set, so as to remove the noise features from the text feature set. Performing the clipping operation on the text feature set is merely an exemplary illustration of updating the text feature set, and a method for updating the text feature set is not limited herein.

In some embodiments, updating the text feature set in the output network layer removes the noise features from the text feature set, which helps improve output quality of the dialogue model, thereby high-consistency hallucination output caused by the dialogue model outputting over-saturated classification results is avoided. Next, a process of updating the text feature set in the output network layer is further introduced.

As an optional implementation manner, the text feature set in the output network layer being updated, to obtain the updated text feature set includes: in response to a response amplitude of a text feature in the text feature set in the output network layer being less than a first response amplitude threshold, the response amplitude is adjusted to the first response amplitude threshold; in response to the response amplitude of the text feature in the text feature set in the output network layer being greater than or equal to the first response amplitude threshold and less than or equal to a second response amplitude threshold, the response amplitude is maintained, where the second response amplitude threshold is greater than or equal to the first response amplitude threshold; in response to the response amplitude of the text feature in the text feature set in the output network layer being greater than the second response amplitude threshold, adjusting the response amplitude to the second response amplitude threshold; and the response amplitude adjusted to the first response amplitude threshold, the maintained response amplitude, and the response amplitude adjusted to the second response amplitude threshold are determined as the updated text feature set.

In some embodiments, the first response amplitude threshold and the second response amplitude threshold are used for measuring magnitude of the response amplitude of the text features in the text feature set. For example, the first response amplitude threshold represents a minimum response amplitude of the text feature, and the second response amplitude threshold represents a maximum response amplitude of the text feature. Based on this, the response amplitude of each text feature included in the text feature set in the output network layer is compared with the first response amplitude threshold and the second response amplitude threshold, respectively, to determine the response amplitudes to be adjusted in the text feature set. When the response amplitude of the text feature in the text feature set in the output network layer is less than the first response amplitude threshold, it indicates that the response amplitude of the text feature is excessively low. In this case, the response amplitude of the text feature in the text feature set is adjusted to the first response amplitude threshold. Similarly, when the response amplitude of the text feature in the text feature set in the output network layer is greater than the second response amplitude threshold, it indicates that the response amplitude of the text feature is excessively high. In this case, the response amplitude of the text feature in the text feature set is adjusted to the second response amplitude threshold. When the response amplitude of the text feature in the text feature set in the output network layer is greater than or equal to the first response amplitude threshold and less than or equal to the second response amplitude threshold, it indicates that the response amplitude of the text feature in the text feature set is within a normal range. In this case, the response amplitude of the text feature in the text feature set is not processed. After the first response amplitude threshold and the second response amplitude threshold corresponding to the text feature set in the output network layer are determined, the text features whose response amplitudes fall within the range of the first response amplitude threshold and the second response amplitude threshold are determined as the text features included in the updated text feature set, in other words, the text features included in the updated text feature set all fall within the response amplitude threshold range.

By way of example, a piecewise function is used for determining whether the response amplitude of the text feature in the text feature set is within a normal range, and the text features with response amplitudes less than the first response amplitude threshold and the text features with response amplitudes greater than the second response amplitude threshold are removed. The piecewise function is expressed as the following formula (1).$FC \left(h\right) = \left\{h, \begin{matrix}{h}_{min} , h < {h}_{min} \\ {h}_{min} \leq h \leq {h}_{max} \\ {h}_{max} , h > {h}_{max}\end{matrix}\right.$ (1)

FC(h) is used for representing the piecewise function; hₘᵢₙ is used for representing the first response amplitude threshold; h is used for representing the response amplitude of the text feature in the text feature set that falls within the normal range; and hₘₐₓ is used for representing the second response amplitude threshold. As is seen from the formula, the response amplitude of the text feature in the text feature set is greater than or equal to the first response amplitude threshold and less than or equal to the second response amplitude threshold. Based on this, when the response amplitude h of the text feature in the text feature set is less than the first response amplitude threshold, the response amplitude is clipped to the first response amplitude threshold; when the response amplitude of the text feature in the text feature set is greater than the second response amplitude threshold, the response amplitude is clipped to the second response amplitude threshold, to ensure that the response amplitudes of the text features in the text feature set all fall within the response amplitude threshold range.

Optionally, the first response amplitude threshold and the second response amplitude threshold are obtained by using a dynamic storage feature response of a MemoryBank. The MemoryBank is a first-in-first-out feature memory that stores feature responses of 3,000 text units. The feature responses of the 3,000 text units are sorted, and hₘₐₓ is set as the 0.2nd percentile of the maximum response amplitude, and hₘᵢₙ is set as the 0.2nd percentile of the minimum response amplitude. This is merely an exemplary illustration, and a manner of determining the first response amplitude threshold and a second response amplitude threshold is not limited herein.

As an optional implementation manner, the information detection method further includes: arrangement orders of multiple hidden network layers in the dialogue model are respectively acquired; and the target hidden network layer is determined among the multiple hidden network layers based on the arrangement order.

In some embodiments, since the dialogue model includes multiple hidden network layers, the multiple hidden network layers help the generative dialogue model learn more complex semantic and grammatical rules, thereby more accurate response information is generated. The multiple hidden network layers have a corresponding sequential order in the dialogue model. Based on this, the arrangement orders of the multiple hidden network layers in the dialogue model are respectively acquired, and the target hidden network layer is determined among the multiple hidden network layers based on the arrangement order. The target hidden network layer is an intermediate layer among the multiple hidden network layers. This is merely an exemplary illustration, and a specific position of the target hidden network layer in the dialogue model is not limited herein.

Next, a process of determining the target hidden network layer among the multiple hidden network layers based on the arrangement orders of the multiple hidden network layers is further introduced.

As an optional implementation manner, the target hidden network layer being determined among the multiple hidden network layers based on the arrangement orders includes: the hidden network layer located at a middle arrangement order as the target hidden network layer.

In some embodiments, after the arrangement orders of the multiple hidden network layers in the dialogue model are determined, the hidden network layer located at the middle arrangement order among the multiple hidden network layers is determined as the target hidden network layer, in other words, the target hidden network layer is the intermediate layer among the multiple hidden network layers.

By way of example, assuming that the dialogue model is the llama-7B model. Assuming that the llama-7B model includes 33 hidden network layers. Based on this, the 17th hidden network layer (intermediate layer) is selected as the target hidden network layer.

As an optional implementation manner, in the step S204, the detection result of the response information being determined based on the target text feature of the response information, includes: a metric indicator of the response information is determined based on the target text feature of the response information, where the metric indicator is used for indicating a degree of reliability of the response information output by the dialogue model; and the detection result of the response information is determined based on the metric indicator.

In some embodiments, after the target text feature of the response information is determined, a feature covariance matrix of the response information is constructed according to the target text feature of the response information, and the metric indicator of the response information is determined based on the feature covariance matrix. The metric indicator is used for indicating the degree of reliability of the response information output by the dialogue model. For example, the metric indicator is the hallucination degree metric score of the dialogue model, and the hallucination degree metric score better measures inconsistency of the response information output by the dialogue model. This is merely an exemplary illustration, and the specific content of the metric indicator is not limited herein.

By way of example, assuming that the metric indicator is the hallucination degree metric score. In this case, after the feature covariance matrix of the response information is obtained, the metric indicator is calculated using the following formula (2).$E = \frac{1}{K} logdet \left(Σ+{αI}_{K}\right)$ (2)

E is used for representing the metric indicator, K is used for representing the number of pieces of the response information output by the multiple network layers of the dialogue model, Σ is used for representing the feature covariance matrix, αI_{K} is used for representing a small regularization term and is used for preventing the covariance matrix from being a non-full-rank matrix, I_{K} is used for preventing an identity matrix of dimension K, and is a feature parameter, which is set to 0.001.

Optionally, since a determinant of a matrix is computed through eigenvalues, the metric indicator in the formula (2) is expressed by the following formula (3).$E = \frac{1}{K} log \left({\prod }_{i} {λ}_{i}\right) = \frac{1}{K} {\sum }_{i = 1}^{k} log \left({λ}_{i}\right)$ (3) λ = {λ₁, λ₂, ... ... , λ_{K}} is used for representing K eigenvalues of the matrix.

Optionally, after the metric indicator of the response information is determined, the detection result of the response information is determined based on the metric indicator, where the detection result is used for indicating whether the response information output by the dialogue model is reliable.

Optionally, after the target text feature of the response information is determined, a machine learning model is further used for evaluating the target text feature of the response information to determine the detection result of the response information, or a text similarity algorithm is used for measuring a degree of similarity between the response information and the input information, thereby the degree of reliability of the response information is determined. This is merely an exemplary illustration, and a specific method for determining the detection result of the response information based on the target text feature of the response information is not limited herein.

As an optional embodiment, the detection result of the response information being determined based on the metric indicator includes: in response to the metric indicator being greater than a metric indicator threshold, the detection result indicating that the response information output by the dialogue model is unreliable is determined; and in response to the metric indicator being less than or equal to the metric indicator threshold, the detection result indicating that the response information output by the dialogue model is reliable is determined.

In some embodiments, since the response information output by the dialogue model has a knowledge hallucination problem, in other words, the response information output by the dialogue model is unreliable, based on this, the metric indicator of the response information output by the dialogue model is measured using the metric indicator threshold, so as to determine whether the response information output by the dialogue model is reliable. For example, the metric indicator of the response information output by the dialogue model is compared with the metric indicator threshold, and then based on a comparison result, it is determined whether the response information output by the dialogue model is reliable.

For example, when the metric indicator is greater than the metric indicator threshold, it indicates that the response information output by the dialogue model has a high degree of hallucination, and based on this, the detection result of the response information indicating that the response information output by the dialogue model is unreliable is determined; conversely, when the metric indicator is less than or equal to the metric indicator threshold, it indicates that the response information output by the dialogue model has a low degree of hallucination, and in this case, the detection result of the response information is determined indicating that the response information output by the dialogue model is reliable is determined.

As an optional embodiment, the method for detecting the response information further includes: in response to the detection result indicating that the response information output by the dialogue model is unreliable, output of the response information is prohibited; and in response to the detection result indicating that the response information output by the dialogue model is reliable, the response information is output.

In some embodiments, when the response information output by the dialogue model is unreliable, the dialogue model is prohibited from outputting the response information. Only when the response information output by the dialogue model is reliable, the dialogue model is allowed to output the response information, so as to ensure that only the response information verified as reliable is output, thereby misleading or erroneous information is avoided from being disseminated.

As an optional embodiment, the metric indicator of the response information being determined based on the target text feature of the response information includes: a feature covariance matrix is constructed using at least one target text feature of at least one response information; and the metric indicator of the response information is determined based on the feature covariance matrix.

In some embodiments, as known from the foregoing description, the target text feature is the text feature corresponding to the target text unit of the response information, and the target text unit includes the semantics of the response information. Based on this, when the metric indicator of the response information is determined based on the target text feature of the response information, the feature covariance matrix is constructed based on the target text feature of the response information, and the metric indicator of the response information is then determined based on the feature covariance matrix.

For example, when the at least one response information includes multiple response information, since the multiple response information respectively correspond to the target text feature, in this case, the feature covariance matrix is constructed through the following formula (4).$Σ = {Z}^{T} ⋅ {J}_{d} ⋅ Z$ (4)

Z is used for representing a target text feature matrix corresponding to the response information, *Z^{T}* is used for representing a transpose matrix of the target text feature matrix corresponding to the response information, J_{d} is used for representing a centering matrix, ${J}_{d} = {I}_{d} - \frac{1}{d} {1}_{K} {1}_{K}^{T}$ , where 1_{K} is used for representing an all-ones column vector of dimension K.

Optionally, the target text feature matrix Z corresponding to the response information is obtained by concatenating the target text features corresponding to the multiple response information. For example, Z = [Z₁, Z₂, ... Zᵢ ... , Zₖ], where Zᵢ is used for representing the target text feature h_{T} corresponding to the i-th response information, in other words, Zᵢ = h_{T}, where the target text feature h_{T} is the text feature of the last text unit in the i-th response information.

Optionally, when the at least one response information includes only one piece response information, K in the formula is set to 1, in other words, let K=1, and thereafter, the covariance matrix is constructed with reference to the information detection method described above, and the metric indicator of the response information is then determined using the covariance matrix, which is not be repeated here.

As an optional embodiment, the metric indicator of the response information being determined based on the feature covariance matrix includes: a log-determinant of the feature covariance matrix is determined; and the metric indicator corresponding to the log-determinant is determined.

In some embodiments, since the feature covariance matrix is a matrix used for describing the correlation and variance among different features, based on this, after the feature covariance matrix is determined, the log-determinant of the feature covariance matrix is further determined. The log-determinant is used for measuring a degree of the correlation and variance among features, and the metric indicator corresponding to the log-determinant is then determined based on the log-determinant, so as to measure the reliability of the response information output by the model.

In the steps, by calculating the metric indicator of the response information output by the dialogue model and then the metric indicator is directly used to determine the degree of the reliability of the response information output by the dialogue model. A degree of uncertainty of the entire output sentence corresponding to the response information is better characterized, thereby a degree of knowledge hallucination of the response information is reflected, in other words, the degree of reliability of the response information.

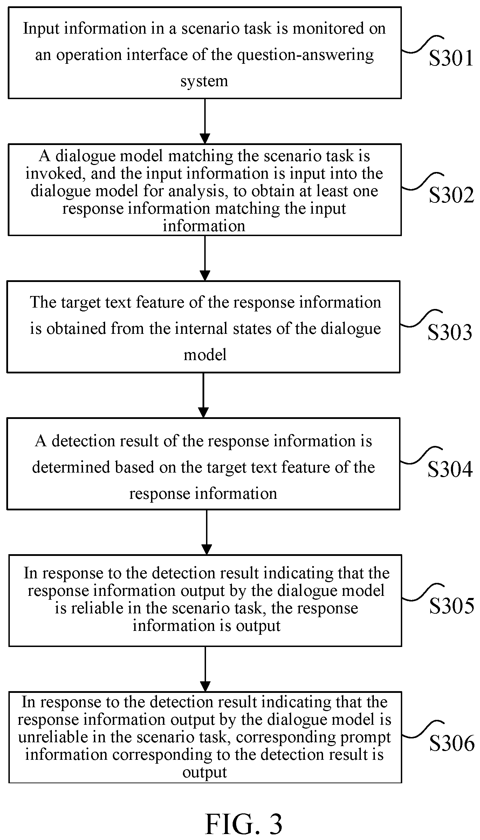

In the operating environment, the present disclosure further provides a method for generating information as shown in FIG. 3, which is applied to a question-answering system deployed in a scenario task, for example, a generative question-answering system. FIG. 3 is a flowchart of another method for generating information according to some embodiments of the present disclosure. As shown in FIG. 3, the method includes the following steps.

In step S301, input information in a scenario task is monitored on an operation interface of the question-answering system.

In a technical solution provided by the step S301 of the present disclosure, the question-answering system is deployed in a scenario task, and the question-answering system generates response information corresponding to the input information based on the input information provided by the user. The operation interface is an interface for the user to interact with the question-answering system. The user inputs, on the operation interface, input information related to the scenario task, where the input information is any question raised by the user, and the input information in the scenario task is monitored on the operation interface of the question-answering system.

In step S302, a dialogue model matching the scenario task is invoked, and the input information is input into the dialogue model for analysis, to obtain at least one response information matching the input information.

In a technical solution provided by the step S302 of the present disclosure, after the input information in the scenario task is monitored, a dialogue model matching the scenario task is invoked, where the dialogue model is a large model, and the input information is then input into the dialogue model for analysis, to obtain the at least one response information matching the input information.

In some embodiments, the dialogue model is used for analyzing the input information to generate the at least one response information matching the input information. Based on this, after the question-answering system monitors the input information in the scenario task, the dialogue model matching the scenario task is invoked. Since the internal states of the dialogue model help the large model better understand the input information of the user, the input information is analyzed using the internal states of the dialogue model, so that the large model generates the at least one response information matching the input information.

In step S303, the target text feature of the response information is obtained from the internal states of the dialogue model.

In a technical solution provided by the step S303 of the present disclosure, the internal states of the dialogue model are used for representing rules for analyzing, by the dialogue model, the input information. Based on this, after the input information is analyzed using the internal states of the dialogue model, the target text feature of the response information is obtained from the internal states of the dialogue model. The target text feature is used for representing the semantics of the response information in the scenario task.

In some embodiments, the internal states of the dialogue model include rules for analyzing the input information by multiple network layers in the dialogue model. The multiple network layers of the dialogue model include a Decoder layer, a FC Layer, etc. The multiple network layers are used for performing different processing operations on the input information, to further obtain output results, and the target text feature of the response information is obtained from the output results of the multiple network layers. The method for obtaining the target text feature of the response information refers to description of the aforementioned step S203, which is not repeated here.

In step S304, a detection result of the response information is determined based on the target text feature of the response information.

In a technical solution provided by the step S304 of the present disclosure, after the target text feature of the response information is obtained, the detection result of the response information is determined based on the target text feature of the response information, where the detection result is used for representing whether the response information output by the dialogue model is reliable.

In some embodiments, after the target text feature of the response information is obtained, a covariance matrix is constructed based on the target text feature of the response information, and the metric indicator of the response information output by the dialogue model is then calculated based on the covariance matrix. The metric indicator is a hallucination degree metric score corresponding to the response information output by the dialogue model. After the metric indicator is obtained, whether the response information output by the dialogue model is reliable is further determined based on the metric indicator and a metric indicator threshold. The specific method for determining whether the response information output by the dialogue model is reliable based on the metric indicator and the metric indicator threshold refers to description of the aforementioned step S204, which is not repeated here.

In step S305, in response to the detection result indicating that the response information output by the dialogue model is reliable in the scenario task, the response information is output.

In a technical solution provided by the step S305 of the present disclosure, after the detection result of the response information is determined, whether to output the response information is determined based on whether the response information output by the dialogue model as indicated by the detection result is reliable in the scenario task.

In some embodiments, when the detection result indicates that the response information output by the dialogue model is reliable in the scenario task, it means that accuracy of the response information output by the dialogue model is relatively high, and in this case, the response information is output.

In step S306, in response to the detection result indicating that the response information output by the dialogue model is unreliable in the scenario task, corresponding prompt information corresponding to the detection result is output.

In a technical solution provided by the step S306 of the present disclosure, unlike the step S305, when the detection result indicates that the response information output by the dialogue model is unreliable in the scenario task, it means that the accuracy of the response information output by the dialogue model is relatively low, and in this case, the response information is not output, and instead, the prompt information corresponding to the detection result is output to remind the user that the response information output by the dialogue model does not match the input information.

Based on the steps S301 to S306 of the embodiment, the target text feature of the response information output by the dialogue model is obtained using the internal states of the dialogue model, which better mines and utilizes the semantic features of the response information, and the detection result of the response information is then determined using the target text feature. The detection result represents whether the response information is reliable in the scenario task. When the response information is reliable in the scenario task, the response information is output; and when the response information is unreliable in the scenario task, the prompt information is output, to ensure that only the response information verified as reliable is output, the technical effect of effectively performing reliability detection on the response information output by the dialogue model is achieved, and the technical problem of being unable to effectively detect the response information output by the model is further solved.

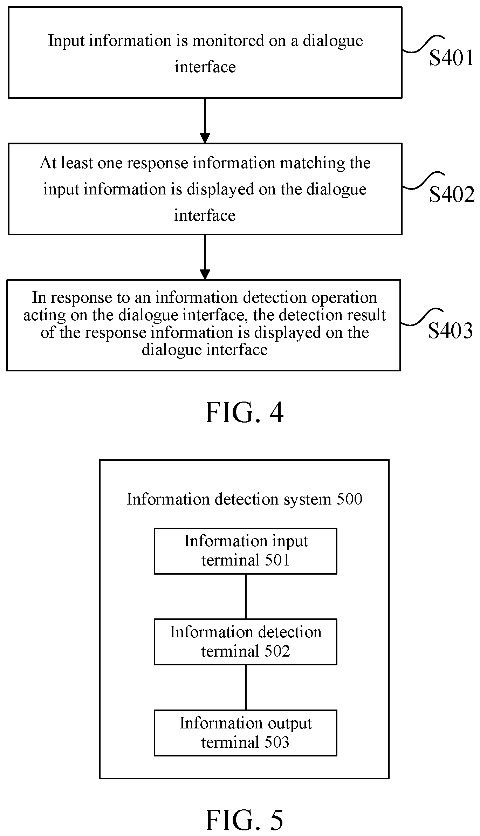

According to some embodiments of the present disclosure, a method for detecting information is further provided from a human-computer interaction side. FIG. 4 is a flowchart of another method for detecting information according to some embodiments of the present disclosure. As shown in FIG. 4, the method includes the following steps.

In step S401, input information is monitored on a dialogue interface.

In a technical solution provided by the step S401 of the present disclosure, the dialogue interface is an interface for the user to interact with the question-answering system, and the user inputs the input information on the dialogue interface, where the input information is multimodal information, and the types of the multimodal information include at least one of the following: text information including character information, video frame information including frame image information, and audio information. The question-answering system monitors the input information on the dialogue interface.

In step S402, at least one response information matching the input information is displayed on the dialogue interface.

In a technical solution provided by the step S402 of the present disclosure, after the input information is monitored on the dialogue interface, a dialogue model is invoked to analyze the input information, to obtain the at least one response information matching the input information, and the at least one response information matching the input information is displayed on the dialogue interface. The response information is multimodal information, and the types of the response information includes at least one of the following: text information, image information, video information, and voice information, and the response information is obtained by analyzing the input information using the internal states of the dialogue model. The process of analyzing the input information using the internal states of the dialogue model refers to the description of the aforementioned step S202, which is not repeated here.

In step S403, in response to an information detection operation acting on the dialogue interface, the detection result of the response information is displayed on the dialogue interface.

In a technical solution provided by the step S403 of the present disclosure, in response to the information detection operation on the dialogue interface, the detection result of the response information is displayed on the dialogue interface, where the detection result is used for representing whether the response information output by the dialogue model is reliable, the detection result is determined based on the target text feature of the response information, the target text feature is used for representing the semantics of the response information, the target text feature is acquired from the internal states of the dialogue model, and the internal states are used for representing the rules by which the dialogue model analyzes the input information. The method for determining whether the response information output by the dialogue model is reliable refers to description of the aforementioned steps S203 and S204, which is not repeated here.

Based on steps S401 to S403 of the embodiment, the input information is monitored on the dialogue interface; the at least one response information matching the input information is displayed on the dialogue interface; and in response to the information detection operation acting on the dialogue interface, the detection result of the response information is displayed on the dialogue interface, where the detection result is used for representing whether the response information output by the dialogue model is reliable. In other words, through the dialogue interface, the detection result of the response information is intuitively displayed, and the user intuitively understands whether the response information output by the dialogue model is reliable, so that the user quickly obtain needed information, and the user experience is improved. In addition, the display of the detection result helps the user judge the reliability of the response information, which helps improve the accuracy and credibility of the human-computer dialogue.

FIG. 5 is a schematic diagram of an information detection system according to some embodiments of the present disclosure. As shown in FIG. 5, information detection system 500 includes: an information input terminal 501, an information detection terminal 502, and an information output terminal 503.

The information input terminal 501 is configured to monitor input information.

In some embodiments, the user inputs information at the information input terminal, and the information input terminal monitors the input information of the user, where the input information is multimodal information, for example, the input information is text information including characters, video frame information including frame image information, audio information, etc., without specific limitation herein.

The information detection terminal 502 is configured to input the input information into the dialogue model for analysis, to obtain at least one response information matching the input information, obtain the target text feature of the response information from the internal states of the dialogue model, where the internal states are used for representing rules by which the dialogue model analyzes the input information, and the target text feature is used for representing the semantics of the response information; and determine a detection result of the response information based on the target text feature of the response information, where the detection result is used for representing whether the response information output by the dialogue model is reliable.

In some embodiments, after the information input terminal monitors the input information, the input information is transmitted to the information detection terminal. After the information detection terminal receiving the input information, the information detection terminal invokes the dialogue model, and analyze the input information using the internal states of the dialogue model, to obtain the at least one response information matching the input information. The detection result of the response information is then determined based on the target text feature of the response information, and whether the response information output by the dialogue model is reliable is determined based on the detection result. The steps of analyzing the input information using the internal states of the dialogue model, to obtain the at least one response information matching the input information refers to the description of the aforementioned step S202, which is not repeated here. The steps of obtaining the target text feature of the response information from the internal states of the dialogue model refers to the description of the aforementioned step S203, which is not repeated here. The steps of determining the detection result of the response information based on the target text feature of the response information refers to the description of the aforementioned step S204, which is not repeated here.

The information output terminal 503 is configured to, in response to the detection result indicating that the response information output by the dialogue model is reliable, output the response information; and in response to the detection result indicating that the response information output by the dialogue model is unreliable, output corresponding prompt information.

In some embodiments, after the information detection terminal determines the detection result of the response information, the detection result is transmitted to the information output terminal. After the information output terminal receiving the detection result, the information output terminal determines whether the response information output by the dialogue model is reliable based on the detection result. When the detection result indicates that the response information output by the dialogue model is reliable, the information output terminal outputs the response information. Conversely, when the detection result indicates that the response information output by the dialogue model is unreliable, in this case, the information output terminal outputs the prompt information to prompt the user that the response information output by the dialogue model is unreliable. The prompt information is text prompt information, for example, "the response information output by the dialogue model is unreliable", or image information, without limiting the specific content of the prompt information herein.

The technical solutions of the embodiments of the present disclosure are further exemplified below with reference to preferred embodiments.

Currently, the requirements for the authenticity and reliability of the response information output by the large model are also continuously increasing. When the large model outputs content that "does not conform to facts" or "fabricates from nothing", it is considered that the output of the large model has the knowledge hallucination. General large models inevitably output erroneous and groundless hallucination outputs. This potential uncertainty and unreliability pose a serious challenge to commercial deployment and application of the large model. Therefore, how to detect whether the output of the large model is reliable and accurate has become particularly important.

In one embodiment, a hallucination detection method based on Perplexity or a hallucination detection method based on SelfCheckGPT is used for determining whether the response information output by the large model is reliable. The Perplexity-based hallucination detection method mainly determines the uncertainty of each character in the response information output by the large model character by character, and then multiplies the uncertainties of each character, to obtain the uncertainty of the response information output by the large model. However, due to inaccurate estimation of the uncertainty of the sentence length of the response information output by the large model, and the diversity of expression forms of the sentences in the response information output by the large model, the detection result of the reliability of the response information output by the large model is inaccurate. On the other hand, the SelfCheckGPT-based hallucination detection method determines the reliability of the response information output by the large model by measuring the consistency of the response information output by the large model multiple times. However, this method requires an additional large model to calculate the consistency of the response information output multiple times, resulting in high computational time overhead. Moreover, this method only detects self-contradictory hallucinations output by the large model, and does not detect hallucinations with high consistency output by the large model. Therefore, all of the methods have the technical problem of being unable to effectively detect the response information output by the large model.

However, some embodiments of the present disclosure provides a method for detecting information, the input information input by the user is obtained, and the large model is caused to output multiple pieces of response information based on the input information input by the user; the text feature set of the response information is acquiring from the penultimate layer of the internal output layer of the large model; using a dynamic feature pruning scheme to prune text features in the text feature set that exceed a threshold to remove abnormal feature responses; obtaining the text feature of the last text unit in the intermediate layer of different output hidden states of the large model; a feature covariance matrix is constructed for the text features of the last text unit of different output layers of the large model; a metric indicator is calculated based on the covariance matrix; and determining whether the knowledge hallucination exists in the response information output by the large model based on the metric indicator, where when the metric indicator is greater than the metric indicator threshold, it is determined that the knowledge hallucination exists in the response information output by the large model, in other words, the response information output by the large model is unreliable, and when the metric indicator is not greater than the metric indicator threshold, it is determined that the knowledge hallucination does not exist in the response information output by the large model, in other words, the response information output by the large model is reliable. In other words, in the embodiment of the present disclosure, the metric indicator is directly used for measuring the inconsistency of the multiple response information output by the large model, which is equivalent to measuring continuous entropy of semantics in the feature space, and the metric indicator better characterizes the degree of uncertainty of the response information output by the large model, thereby the degree of the knowledge hallucination of the response information is reflected, in other words, whether the response information output by the large model being reliable is reflected, the technical effect of effectively performing reliability detection on the response information output by the large model is achieved, and the technical problem of being unable to effectively perform reliability detection on the response information output by the large model is further solved.

The method for detecting information in the embodiments of the present disclosure is further described below.

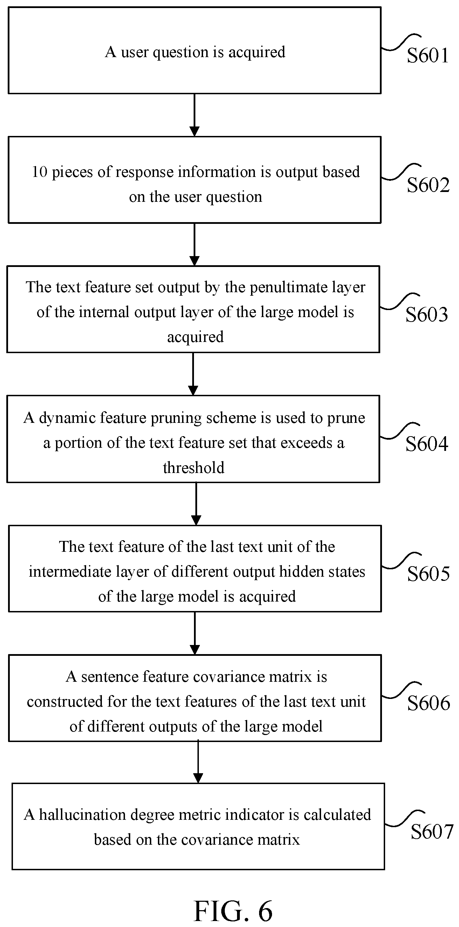

FIG. 6 is a flowchart of a method for detecting information according to some embodiments of the present disclosure. As shown in FIG. 6, the method includes the following steps.

In step S601, a user question is acquired.

In some embodiments, the users input any question on the operation interface, and the large model monitors the user question input on the operation interface, to obtain the user question.

In step S602, 10 pieces of response information is output based on the user question.

In some embodiments, after the question input by the user is obtained, the large model outputs 10 pieces of response information based on the user question, and the pieces of 10 response information are information for answering the user question.

In step S603, the text feature set output by the penultimate layer of the internal output layer of the large model is acquired.

In some embodiments, a structure of the large model is divided into two parts: a Decoder layer and a final fully connected layer (FC Layer). The penultimate layer is used for indicating an output of the Decoder layer and an input of the FC Layer. The output of the Decoder layer is text feature representation of the text unit token in the response information, and the output of the Decoder layer is acquired as the text features of the text unit token in the response information to form the text feature set.

In step S604, a dynamic feature pruning scheme is used to prune a portion of the text feature set that exceeds a threshold.

In some embodiments, a dynamic pruning scheme is used for pruning the abnormal feature responses in the text feature set that exceed the threshold, so as to remove the abnormal feature responses from the text feature set.

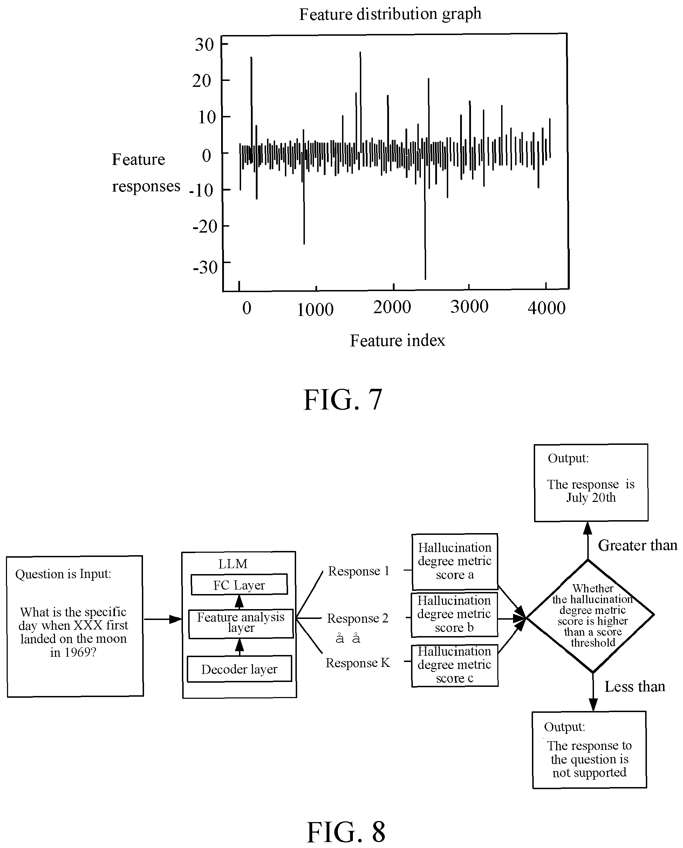

FIG. 7 is a schematic diagram of a feature response of a text feature set according to some embodiments of the present disclosure. As shown in FIG. 7, a feature distribution of a text feature set of a large model in the penultimate layer is illustrated. It is seen from FIG. 7 that the text feature set contains a large number of extreme feature responses, and such extreme feature responses easily cause the large model to output feature classification results with excessively high confidence. Based on this, in order to alleviate hallucination outputs with high consistency caused by oversaturated classification, a feature pruning method is used for pruning the abnormal feature responses in the text feature set.

Optionally, the feature pruning is performed using the following piecewise function: when the feature response h exceeds the maximum threshold hₘₐₓ, the response is truncated to the maximum threshold hₘₐₓ; and when the feature response h is less than the minimum threshold hₘᵢₙ, the response is truncated to the minimum threshold hₘᵢₙ. The piecewise function is as shown in the aforementioned formula (1), which is not repeated here.

Optionally, the minimum threshold hₘᵢₙ and the maximum threshold hₘₐₓ are obtained by using the MemoryBank to dynamically store feature responses. The MemoryBank is a first-in-first-out feature memory that stores feature responses of 3000 text units. The feature responses of the 3000 text units are sorted, and the maximum threshold hₘₐₓ is set to the 0.2% percentile of the maximum response amplitude, and the minimum threshold hₘᵢₙ is set to the 0.2% percentile of the minimum response amplitude. This is merely an exemplary illustration and does not limit the manner of determining the minimum threshold and the maximum threshold.

In step S605, the text feature of the last text unit of the intermediate layer of different output hidden states of the large model is acquired.

In some embodiments, for each question of the user, the large model outputs 10 responses (10 sentence outputs), and each response includes multiple text units, in other words, each response includes multiple tokens. Each token of the 10 sentences corresponds to a feature vector in different layers of the large model. Since in the large model, a feature of the last token of a sentence often contains information of the entire sentence, the feature of the last token is commonly used as the feature of the entire sentence. Based on this, the feature of the last token of the intermediate layer is used as the feature of the entire sentence. For example, the llama7B model has 33 layers, and the feature of the last token of the 17th layer is selected as the feature of the entire sentence. In other words, for the outputs of the 10 sentence, the intermediate layer feature of the last token of each sentence is acquired as the feature of each of the 10 sentences, respectively.

In step S606, a sentence feature covariance matrix is constructed for the text features of the last text unit of different outputs of the large model.

In some embodiments, after the text features of the last text unit of the different outputs of the large model are acquired, the sentence feature covariance matrix is constructed using the text features. Feature representation of the i-th response of the model is represented as Zᵢ = h_{T}. Then, for K generated responses, the covariance matrix of the sentences is represented by the following formula (5).$Σ = {Z}^{T} ⋅ {J}_{d} ⋅ Z$ (5)

Z is used for representing the sentence feature matrix, *Z^{T}* is used for representing the transpose matrix of the sentence feature matrix, J_{d} is used for representing the centering matrix, ${J}_{d} = {I}_{d} - \frac{1}{d} {1}_{K} {1}_{K}^{T}$, where 1_{K} is used for representing an all-ones column vector of dimension K.

Optionally, the sentence feature matrix Z is obtained by concatenating the text features of the last text unit of different responses of the large model. For example, Z = [Z₁, Z₂, ... Zᵢ ... , Zₖ], where Zᵢ is used for representing a text feature corresponding to the i-th response of the large model.

In step S607, a hallucination degree metric indicator is calculated based on the covariance matrix.

In some embodiments, after the covariance matrix is determined, the hallucination degree metric indicator is also calculated based on the covariance matrix, where the hallucination degree metric indicator is a hallucination degree metric score.

For example, after the covariance matrix is obtained, the hallucination degree metric indicator is obtained by calculating a log-determinant of the covariance matrix according to the following formula (6).$E = \frac{1}{K} logdet \left(Σ+{αI}_{K}\right)$ (6)

E is used for representing the hallucination degree metric indicator, K is used for representing the number of responses output by the large model, Σ is used for representing the covariance matrix, a relatively small regularization term αI_{K} is used for preventing the covariance matrix from being a rank-deficient matrix, I_{K} is used for representing an identity matrix of dimension K, α is used for representing a feature parameter set to 0.001.

Optionally, since the determinant of the matrix is calculated through eigenvalues, the metric indicator in the formula is expressed as the following.$E = \frac{1}{K} log \left({\prod }_{i} {λ}_{i}\right) = \frac{1}{K} {\sum }_{i = 1}^{k} log \left({λ}_{i}\right)$ (7)

λ = { λ₁, λ₂, ... ... , λ_{K}} is used for representing K eigenvalues of the matrix Σ + α I_{K}.

In step S608, whether the knowledge hallucination exists in the output of the large model is determined based on the hallucination degree metric indicator.

In some embodiments, after the hallucination degree metric indicator is acquired, the hallucination degree metric indicator is compared with a metric indicator threshold. When the hallucination degree metric indicator is greater than the metric indicator threshold, it indicates that the knowledge hallucination exists in the output of the large model. When the hallucination degree metric indicator is not greater than the metric indicator threshold, it indicates that the knowledge hallucination does not exist in the output of the large model.

In the steps S601 to S608, a question input by the user is acquired, and the large model outputs multiple pieces of response information based on the question input by the user; the text feature set of the response information from the penultimate layer of an internal output layer of the large model is acquired; the dynamic feature pruning scheme is used for pruning text features in the text feature set that exceed a threshold, so as to remove the abnormal feature responses; the text feature of the last text unit in the hidden state intermediate layer of different outputs of the large model is acquired; the feature covariance matrix is constructed for the text features of the last text unit of different output layers of the large model; the metric indicator is calculated based on the covariance matrix; and whether the knowledge hallucination exists in the response information output by the large model is determined based on the metric indicator, where when the metric indicator is greater than the metric indicator threshold, it is determined that the knowledge hallucination exists in the response information output by the large model, in other words, the response information output by the large model is unreliable, and when the metric indicator is not greater than the metric indicator threshold, it is determined that the knowledge hallucination does not exist in the response information output by the large model, in other words, the response information output by the large model is reliable. In other words, in the embodiments of the present disclosure, the metric indicator is directly used for measuring the inconsistency of the multiple pieces of response information output by the large model, which is equivalent to measuring the continuous entropy of semantics in the feature space. The metric indicator is used for better characterizing the degree of uncertainty of the response information output by the large model, thereby the degree of the knowledge hallucination of the response information is reflected, in other words, whether the response information output by the large model is reliable is reflected, the technical effect of effectively performing reliability detection on the response information output by the large model is achieved, and the technical problem that the reliability detection on the response information output by the large model cannot be effectively performed is further solved.

FIG. 8 is a schematic diagram of knowledge hallucination detection for a large model according to some embodiments of the present disclosure. As shown in FIG. 8, when a question input by a user is "What is the specific day when XXX first landed on the moon in 1969?", after the question input by the user is received by the large language model, the large language model processes the question using multiple internal network layers and outputs K different responses. For example, response 1: a hallucination degree metric score a; response 2: a hallucination degree metric score b; response K: a hallucination degree metric score c. By analyzing the K different responses, K hallucination degree metric scores are obtained, where the K hallucination degree metric scores are respectively used for measuring the reliability of the K responses. When the hallucination degree metric score of a certain response is greater than a score threshold, the certain response corresponding to the hallucination degree metric score is output. When no response has a hallucination degree metric score greater than the score threshold, only a prompt message is output, for example, the response to the question is not supported.

It should be noted that the user information (including but not limited to user device information, user personal information, etc.) and data (including but not limited to data used for analysis, stored data, displayed data, etc.) involved in the present disclosure are all information and data authorized by the user or fully authorized by all parties, and the collection, use, and processing of the relevant data need to comply with relevant laws, regulations, and standards of the relevant countries and regions, and corresponding operation entries are provided for the user to choose to authorize or refuse.

It should be noted that, for the foregoing method embodiments, for simplicity of description, they are all expressed as a series of action combinations. However, the person having ordinary skill in the art should understand that the present disclosure is not limited by the described order of actions, because according to the present disclosure, certain steps are performed in other orders or simultaneously. Secondly, the person having ordinary skill in the art should also understand that the embodiments described in the specification are all preferred embodiments, and the actions and components involved are not necessarily required by the present disclosure.

From the description of the implementations, the person having ordinary skill in the art clearly understands that methods according to the embodiments are implemented by means of software plus a necessary general-purpose hardware platform, and certainly also by hardware. Based on such an understanding, the technical solutions of the present disclosure essentially or the part contributing to the prior art is embodied in a form of a software product. The computer software product is stored in a storage medium (such as ROM/RAM, a magnetic disk, or an optical disk), including multiple instructions for causing a terminal device (which is a mobile phone, a computer, a server, or a network device, etc.) to perform the methods described in various embodiments of the present disclosure.

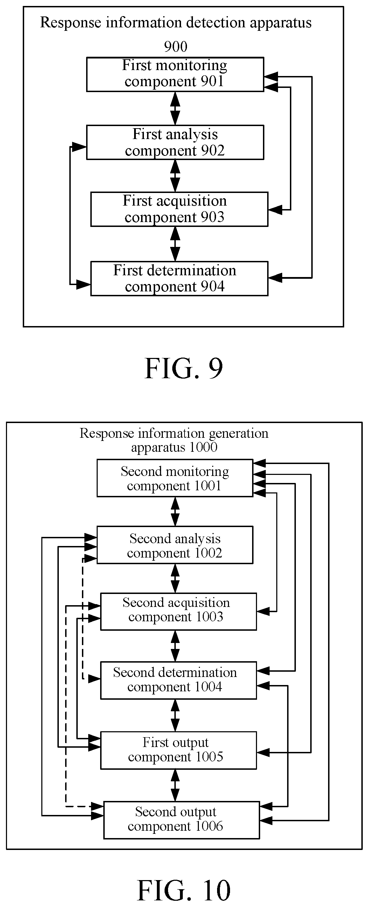

According to some embodiments of the present disclosure, a detection apparatus for information used for implementing the detection method for information is further provided. FIG. 9 is a schematic diagram of an information detection apparatus according to some embodiments of the present disclosure. As shown in FIG. 9, an information detection apparatus 900 includes: a first monitoring component 901, a first analysis component 902, a first acquisition component 903, and a first determination component 904.

The first monitoring component 901 is configured to monitor input information.

The first analysis component 902 is configured to input the input information into a dialogue model for analysis, to obtain at least one piece of response information matching the input information.

The first acquisition component 903 is configured to acquire, from internal states of the dialogue model, a target text feature of the response information, where the internal states are used for representing rules by which the dialogue model analyzes the input information, and the target text feature is used for representing semantics of the response information.

The first determination component 904 is configured to determine a detection result of the response information based on the target text feature of the response information, where the detection result is used for representing whether the response information output by the dialogue model is reliable.

It should be noted herein that the first monitoring component 901, the first analysis component 902, the first acquisition component 903, and the first determination component 904 correspond to the steps S201 to S204 in the foregoing embodiments. The four components and the steps corresponding to the four components implement the same examples and application scenarios, but are not limited to the content disclosed in Embodiment 1 above. It should be noted that the components or components are hardware components or software components stored in a memory (for example, the memory 104) and processed by one or more processors (for example, the processors 102a, 102b, ..., 102n). The components, as part of the apparatus, are also run in the computer terminal 10 provided in Embodiment 1.

According to some embodiments of the present disclosure, a generation apparatus for information used for implementing the generation method for information is further provided. FIG. 10 is a schematic diagram of another an information generation apparatus according to some embodiments of the present disclosure. As shown in FIG. 10, an information generation apparatus 1000 includes: a second monitoring component 1001, a second analysis component 1002, a second acquisition component 1003, a second determination component 1004, a first output component 1005, and a second output component 1006.

The second monitoring component 1001 is configured to monitor input information in a scenario task on an operation interface of a question-answering system.

The second analysis component 1002 is configured to invoke a dialogue model matching the scenario task, and input the input information into the dialogue model for analysis, to obtain at least one piece of response information matching the input information.

The second acquisition component 1003 is configured to acquire, from internal states of the dialogue model, a target text feature of the response information, where the internal states are used for representing rules by which the dialogue model analyzes the input information, and the target text feature is used for representing semantics of the response information in the scenario task.

The second determination component 1004 is configured to determine a detection result of the response information based on the target text feature of the response information.

The first output component 1005 is configured to, in response to the detection result indicating that the response information output by the dialogue model is reliable in the scenario task, output the response information.

The second output component 1006 is configured to, in response to the detection result indicating that the response information output by the dialogue model is unreliable in the scenario task, output prompt information corresponding to the detection result.

It should be noted herein that the second monitoring component 1001, the second analysis component 1002, the second acquisition component 1003, the second determination component 1004, the first output component 1005, and the second output component 1006 correspond to the steps S301 to S306 in the foregoing embodiments. The six components and the steps corresponding to the six components implement the same examples and application scenarios, but are not limited to the content disclosed in Embodiment 1 above. It should be noted that the components or components are hardware components or software components stored in a memory (for example, the memory 104) and processed by one or more processors (for example, the processors 102a, 102b, ..., 102n). The components, as part of the apparatus, are also run in the computer terminal 10 provided in Embodiment 1.

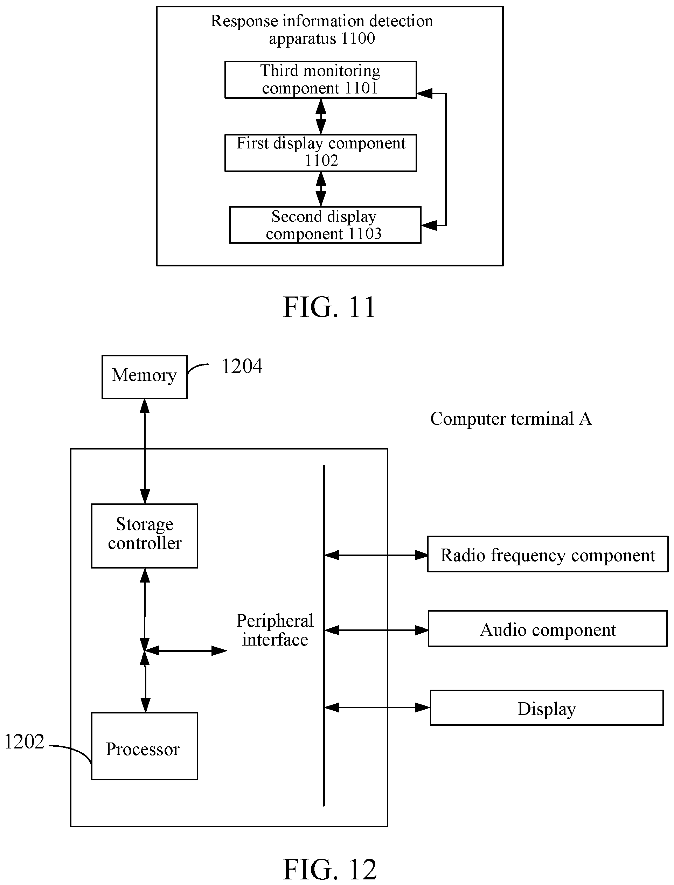

According to some embodiments of the present disclosure, a detection apparatus for information used for implementing the detection method for information is further provided. FIG. 11 is a schematic diagram of another information detection apparatus according to some embodiments of the present disclosure. As shown in FIG. 11, an information detection apparatus 1100 includes: a third monitoring component 1101, a first display component 1102, and a second display component 1103.

The third monitoring component 1101 is configured to monitor input information on a dialogue interface.

The first display component 1102 is configured to display, on the dialogue interface, at least one piece of response information matching the input information, where the response information is obtained by analyzing the input information using internal states of a dialogue model.

The second display component 1103 is configured to, in response to an information detection operation acting on the dialogue interface, display a detection result of the response information on the dialogue interface, where the detection result is used for representing whether the response information output by the dialogue model is reliable, and the detection result is determined based on a target text feature of the response information, the target text feature is used for representing semantics of the response information, the target text feature is acquired from the internal states of the dialogue model, and the internal states are used for representing rules by which the dialogue model analyzes the input information.

It should be noted herein that the third monitoring component 1101, the first display component 1102, and the second display component 1103 correspond to steps S401 to S403 in the foregoing embodiments. The three components and the steps corresponding to the three components implement the same examples and application scenarios, but are not limited to the content disclosed in Embodiment 1 above. It should be noted that the components or components are hardware components or software components stored in a memory (for example, the memory 104) and processed by one or more processors (for example, the processors 102a, 102b, ..., 102n). The components, as part of the apparatus, are also run in the computer terminal 10 provided in Embodiment 1.

It should be noted that the preferred implementation solutions involved in the embodiments of the present disclosure are the same as the solutions, application scenarios, and implementation processes provided in the foregoing embodiments, but are not limited to the solutions provided in the foregoing embodiments.

Some embodiments of the present disclosure provides a computer terminal, and the computer terminal is any computer terminal device in a computer terminal group. Optionally, in some embodiments, the computer terminal is also replaced with a terminal device such as a mobile terminal.

Optionally, in some embodiments, the computer terminal is located in at least one network device among multiple network devices of a computer network.

In some embodiments, the computer terminal executes program codes of the following steps in the detection method for information: input information is monitored; the input information is input into a dialogue model for analysis, to obtain at least one piece of response information matching the input information; a target text feature of the response information is acquired from internal states of the dialogue model, where the internal states are used for representing rules by which the dialogue model analyzes the input information, and the target text feature is used for representing semantics of the response information; and a detection result of the response information is determined based on the target text feature of the response information, where the detection result is used for indicating whether the response information output by the dialogue model is reliable.

Optionally, FIG. 12 is a structural block diagram of a computer terminal according to some embodiments of the present disclosure. As shown in FIG. 12, a computer terminal A includes: one or more (only one shown in the figure) processors 1202, a memory 1204, a storage controller, and a peripheral interface, where the peripheral interface is connected to a radio frequency component, an audio component, and a display.

The memory is used for storing software programs and components, such as program instructions/components corresponding to the detection method and apparatus for response information in the embodiments of the present disclosure. The processor executes various functional applications and data processing by running the software programs and components stored in the memory, so as to implement the detection method for response information. The memory includes high-speed random access memory, and also includes non-transitory memory, such as one or more magnetic storage devices, flash memory, or other non-transitory solid-state memory. In some examples, the memory further includes a memory remotely disposed relative to the processor, and these remote memories are connected to the terminal A through a network. Examples of the network include but are not limited to the Internet, an intranet, a local area network, a mobile communication network, and combinations thereof.

The processor calls information and applications stored in the memory through a transmission device to perform the following steps: input information is monitored; the input information is input into a dialogue model for analysis, to obtain at least one piece of response information matching the input information; a target text feature of the response information is acquired from internal states of the dialogue model, where the internal states are used for representing rules by which the dialogue model analyzes the input information, and the target text feature is used for representing semantics of the response information; and a detection result of the response information is determined based on the target text feature of the response information, where the detection result is used for indicating whether the response information output by the dialogue model is reliable.

Optionally, the processor also executes program codes of the following steps: a text feature set of the response information in a network layer of the dialogue model is acquired, where the internal states include the text feature set in the network layer, and the text feature set in the network layer includes text features of text units constituting the response information; and the target text feature is determined from the text feature set in the network layer.

Optionally, the processor also executes program codes of the following steps: a text feature corresponding to a target text unit in the response information is determined from the text feature set in the network layer, where the target text unit includes semantics of the response information; and the text feature corresponding to the target text unit is determined as the target text feature.

Optionally, the processor also executes program codes of the following steps: a text feature set of the response information in an output network layer of the dialogue model is acquired; and a text feature set in a target hidden network layer corresponding to the text feature set in the output network layer is determined in the target hidden network layer of the dialogue model.

Optionally, the processor also executes program codes of the following steps: the text feature set in the output network layer is updated, to obtain an updated text feature set, where the updated text feature set is free of including noise features; and a text feature set in the target hidden network layer corresponding to the updated text feature set is determined in the target hidden network layer.

Optionally, the processor also executes program codes of the following steps: in response to a response amplitude of a text feature in the text feature set in the output network layer being less than a first response amplitude threshold, adjusting the response amplitude to the first response amplitude threshold; in response to the response amplitude of the text feature in the text feature set in the output network layer being greater than or equal to the first response amplitude threshold and less than or equal to a second response amplitude threshold, the response amplitude is maintained, where the second response amplitude threshold is greater than or equal to the first response amplitude threshold; in response to the response amplitude of the text feature in the text feature set in the output network layer being greater than the second response amplitude threshold, the response amplitude is adjusted to the second response amplitude threshold; and determining the response amplitude adjusted to the first response amplitude threshold, the maintained response amplitude, and the response amplitude adjusted to the second response amplitude threshold are determined as the updated text feature set.

Optionally, the processor also executes program codes of the following steps: arrangement orders of multiple hidden network layers in the dialogue model are respectively acquired; and the target hidden network layer among the multiple hidden network layers is determined based on the arrangement orders.

Optionally, the processor also executes program codes of the following step: the hidden network layer located at a middle arrangement order is determined as the target hidden network layer.

Optionally, the processor also executes program codes of the following steps: a metric indicator of the response information is determined based on the target text feature of the response information, where the metric indicator is used for representing a degree of reliability of the response information output by the dialogue model; and the detection result of the response information is determined based on the metric indicator.

Optionally, the processor also executes program codes of the following steps: in response to the metric indicator being greater than a metric indicator threshold, the detection result indicating that the response information output by the dialogue model is unreliable is determined; and in response to the metric indicator being less than or equal to the metric indicator threshold, the detection result indicating that the response information output by the dialogue model is reliable is determined.

Optionally, the processor also executes program codes of the following steps: in response to the detection result indicating that the response information output by the dialogue model is unreliable, output of the response information is prohibited; and in response to the detection result indicating that the response information output by the dialogue model is reliable, the response information is output.

Optionally, the processor also executes program codes of the following steps: a feature covariance matrix is constructed using multiple target text features of multiple pieces of response information; and the metric indicator of the response information is determined based on the feature covariance matrix.

By adopting the embodiments of the present disclosure, the detection method for information is provided. By using the internal states of the dialogue model to acquire the target text feature of the response information output by the dialogue model, the semantic features of the response information are better mined and utilized, and the target text feature is used for determining the detection result of the response information. The detection result is used for representing the overall degree of uncertainty of the response information, in other words, whether the response information output by the dialogue model is reliable is reflected, the technical effect of effectively performing reliability detection on the response information output by the dialogue model is achieved, and the technical problem that the reliability detection on the response information output by the large model cannot be effectively performed is further solved.

The person having ordinary skill in the art understands that a structure shown in FIG. 12 is merely illustrative. The computer terminal is also a terminal device such as a smartphone (such as an Android phone, an iOS phone, etc.), a tablet computer, a personal digital assistant, or a mobile internet device (MID), PAD. FIG. 12 does not limit the structure of the electronic device. For example, the computer terminal A also includes more or fewer components (such as a network interface, a display device, etc.) than those shown in FIG. 12, or has a configuration different from that shown in FIG. 12.

The person having ordinary skill in the art understands that all or part of the steps in the various methods of the embodiments are performed by a program instructing hardware related to a terminal device. The program is stored in a computer-readable storage medium, and the storage medium includes: a flash disk, a read-only memory (ROM), a random access memory (RAM), a magnetic disk, or an optical disk, etc.

Some embodiments of the present disclosure further provides a computer-readable storage medium. Optionally, in some embodiments, the storage medium is used for storing program codes executed by the detection method for response information provided in Embodiment 1 above.

Optionally, in some embodiments, the storage medium is located in any computer terminal in a computer terminal group in a computer network, or located in any mobile terminal in a mobile terminal group.

Optionally, in some embodiments, the storage medium is configured to store program codes for performing the following steps: input information is monitored; the input information is input into a dialogue model for analysis, to obtain at least one piece of response information matching the input information; a target text feature of the response information is acquired from internal states of the dialogue model, where the internal states are used for representing rules by which the dialogue model analyzes the input information, and the target text feature is used for representing semantics of the response information; and a detection result of the response information is determined based on the target text feature of the response information, where the detection result is used for indicating whether the response information output by the dialogue model is reliable.

Some embodiments of the present disclosure further provides a computer program product, including computer instructions. When the computer instructions are executed by a processor, the detection method for information provided in the embodiments of the present disclosure is implemented.

In some embodiments, the computer instructions are stored in a read-only memory (ROM), or are computer instructions loaded from a storage component into a random access memory (RAM), to be executed by the processor for various appropriate actions and processing in the status detection method of a database product.

In some embodiments, part or all of the computer instructions are loaded and/or installed onto an electronic device via at least one of the read-only memory or a communication component. When the computer instructions are loaded into the random access memory and executed by a computing component, one or more steps of the detection method for information are performed.

Serial numbers of the embodiments of the present disclosure are merely for description and do not represent advantages or disadvantages of the embodiments.

In the embodiments of the present disclosure, the descriptions of the various embodiments each have their own emphases. For parts not described in detail in a certain embodiment, reference is made to the relevant descriptions of other embodiments.

In the several embodiments provided in the present disclosure, it should be understood that the disclosed technical content is implemented through other approaches. The apparatus embodiments described above are merely illustrative. For example, division of the components is merely a logical function division, and there is other division manners in actual implementation, for example, multiple components or components are combined or integrated into another system, or some features are omitted, or not performed. In addition, mutual coupling, direct coupling, or communication connection shown or discussed is through some interfaces, and indirect coupling or communication connection between components is in electrical or other forms.

The components described as separate parts may or may not be physically separated, and the parts displayed as components may or may not be physical components, in other words, the components described as separate parts are located in one place, or are distributed onto multiple network components. Some or all of the components are selected according to actual needs to achieve a purpose of the solutions of some embodiments.

In addition, in the various embodiments of the present disclosure, each functional component is integrated into one processing component, or each component physically exists separately, or two or more components are integrated into one component. The integrated components are implemented in a form of hardware, or in a form of a software functional component.

When the integrated component is implemented in the form of the software functional component and is sold or used as an independent product, it is stored in a computer-readable storage medium. Based on such understanding, the technical solutions of the present disclosure essentially, or a part contributing to the prior art, or all or part of the technical solutions, are embodied in a form of a software product. The computer software product is stored in a storage medium, including multiple instructions for causing a computer device (which is a personal computer, a server, or a network device, etc.) to perform all or part of the steps of the methods described in the various embodiments of the present disclosure. The foregoing storage medium includes: a U disk, a Read-Only memory, a Random Access Memory, a removable hard disk, a magnetic disk, or an optical disk, and other various media capable of storing program codes.

The descriptions are merely preferred implementations of the present disclosure. It should be noted that, for the person having ordinary skill in the art, several improvements and modifications are also made without departing from the principles of the present disclosure, and these improvements and modifications are also regarded as a protection scope of the present disclosure.

### Industrial Applicability

The solutions provided in the embodiments of the present disclosure are applied to a question-answering system. Based on a dialogue model to analyze input information, at least one piece of response information matching the input information is obtained. Since internal states of the dialogue model are used for representing rules by which the dialogue model analyzes the input information, a target text feature of the response information is acquired from the internal states of the dialogue model, so that semantic features of the response information are better mined and utilized. The target text feature is used for determining a detection result of the response information. The detection result is used for representing the overall degree of uncertainty of the response information, in other words, whether the response information output by the dialogue model is reliable is reflected, the technical effect of effectively performing reliability detection on the response information output by the dialogue model is achieved, and the technical problem that the reliability detection on the response information output by a large model cannot be effectively performed is further solved.

## Claims

1. An information detection method, comprising:
monitoring input information;
inputting the input information into a dialogue model for analysis, to obtain at least one piece of response information matching the input information;
acquiring, from internal states of the dialogue model, a target text feature of the response information, wherein the internal states are used for representing rules for analyzing, by the dialogue model, the input information, and the target text feature is used for representing semantics of the response information; and
determining a detection result of the response information based on the target text feature of the response information, wherein the detection result is used for representing whether the response information output by the dialogue model is reliable.

2. The information detection method as claimed in claim 1, wherein acquiring, from the internal states of the dialogue model, the target text feature corresponding to the response information comprises:
acquiring a text feature set of the response information in a network layer of the dialogue model, wherein the internal states comprise the text feature set in the network layer, and the text feature set in the network layer comprises text features of text units constituting the response information; and
determining the target text feature from the text feature set in the network layer.

3. The information detection method as claimed in claim 2, wherein determining the target text feature from the text feature set in the network layer comprises:
determining, from the text feature set in the network layer, a text feature corresponding to a target text unit in the response information, wherein the target text unit comprises the semantics of the response information; and
determining the text feature corresponding to the target text unit as the target text feature.

4. The information detection method as claimed in claim 2, wherein acquiring the text feature set of the response information in the network layer of the dialogue model comprises:
acquiring a text feature set of the response information in an output network layer of the dialogue model; and
determining, in a target hidden network layer of the dialogue model, a text feature set in the target hidden network layer corresponding to the text feature set in the output network layer.

5. The information detection method as claimed in claim 4, wherein determining, in the target hidden network layer of the dialogue model, the text feature set in the target hidden network layer corresponding to the text feature set in the output network layer comprises:
updating the text feature set in the output network layer, to obtain the updated text feature set, wherein the updated text feature set is free of comprising noise features; and
determining, in the target hidden network layer, the text feature set in the target hidden network layer corresponding to the updated text feature set.

6. The information detection method as claimed in claim 5, wherein updating the text feature set in the output network layer, to obtain the updated text feature set comprises:
in response to a response amplitude of a text feature in the text feature set in the output network layer being less than a first response amplitude threshold, adjusting the response amplitude to the first response amplitude threshold;
in response to the response amplitude of the text feature in the text feature set in the output network layer being greater than or equal to the first response amplitude threshold and less than or equal to a second response amplitude threshold, maintaining the response amplitude, wherein the second response amplitude threshold is greater than or equal to the first response amplitude threshold;
in response to the response amplitude of the text feature in the text feature set in the output network layer being greater than the second response amplitude threshold, adjusting the response amplitude to the second response amplitude threshold; and
determining the response amplitude adjusted to the first response amplitude threshold, the maintained response amplitude, and the response amplitude adjusted to the second response amplitude threshold as the updated text feature set.

7. The information detection method as claimed in claim 4, wherein the information detection method further comprises:
respectively acquiring arrangement orders of a plurality of hidden network layers in the dialogue model; and
determining the target hidden network layer among the plurality of hidden network layers based on the arrangement orders.

8. The information detection method as claimed in claim 7, wherein determining the target hidden network layer from the plurality of hidden network layers based on the arrangement orders comprises:
determining the hidden network layer at a middle arrangement order as the target hidden network layer.

9. The information detection method as claimed in claim 1, wherein determining the detection result of the response information based on the target text feature of the response information comprises:
determining a metric indicator of the response information based on the target text feature of the response information, wherein the metric indicator is used for representing a degree of reliability of the response information output by the dialogue model; and
determining the detection result of the response information based on the metric indicator.

10. The information detection method as claimed in claim 9, wherein determining the detection result of the response information based on the metric indicator comprises:
in response to the metric indicator being greater than a metric indicator threshold, determining the detection result indicating that the response information output by the dialogue model is unreliable; and
in response to the metric indicator being less than or equal to the metric indicator threshold, determining the detection result indicating that the response information output by the dialogue model is reliable.

11. The information detection method as claimed in claim 10, wherein the information detection method further comprises:
in response to the detection result indicating that the response information output by the dialogue model is unreliable, prohibiting output of the response information; and
in response to the detection result indicating that the response information output by the dialogue model is reliable, outputting the response information.

12. The information detection method as claimed in claim 9, wherein determining the metric indicator of the response information based on the target text feature of the response information comprises:
constructing a feature covariance matrix by using at least one target text feature of at least one piece of the response information; and
determining the metric indicator of the response information based on the feature covariance matrix.

13. An information generation method, applied to a question-answering system deployed in a scenario task, the information generation method comprising:
monitoring input information in the scenario task on an operation interface of the question-answering system;
invoking a dialogue model matching the scenario task, and inputting the input information into the dialogue model for analysis, to obtain at least one piece of response information matching the input information;
acquiring, from internal states of the dialogue model, a target text feature of the response information, wherein the internal states is used for representing rules for analyzing, by the dialogue model, the input information, and the target text feature is used for representing semantics of the response information in the scenario task;
determining a detection result of the response information based on the target text feature of the response information;
in response to the detection result indicating that the response information output by the dialogue model is reliable in the scenario task, outputting the response information; and
in response to the detection result indicating that the response information output by the dialogue model is unreliable in the scenario task, outputting prompt information corresponding to the detection result.

14. An information detection method, comprising:
monitoring input information on a dialogue interface;
displaying, on the dialogue interface, at least one piece of response information matching the input information, wherein the response information is obtained by analyzing the input information using a dialogue model; and
in response to an information detection operation acting on the dialogue interface, displaying a detection result of the response information on the dialogue interface, wherein the detection result is used for representing whether the response information output by the dialogue model is reliable, the detection result is determined based on a target text feature of the response information, the target text feature is used for representing semantics of the response information, the target text feature is acquired from internal states of the dialogue model, and the internal states are used for representing rules for analyzing, by the dialogue model, the input information.

15. The information detection method as claimed in claim 14, wherein the input information and the response information are multimodal information, and a type of the multimodal information comprises at least one of the following: text information comprising character information, video frame information comprising frame image information, and audio information; and a type of the response information comprises at least one of the following: text information, image information, video information, and voice information.

16. An information detection system, comprising:
an information input terminal, configured to monitor input information;
an information detection terminal, configured to input the input information into a dialogue model for analysis, to obtain at least one piece of response information matching the input information, acquire, from internal states of the dialogue model, a target text feature of the response information, wherein the internal states is used for representing rules for analyzing, by the dialogue model, the input information, and the target text feature is used for representing semantics of the response information, and determine a detection result of the response information based on the target text feature of the response information, wherein the detection result is used for representing whether the response information output by the dialogue model is reliable; and
an information output terminal, configured to, in response to the detection result indicating that the response information output by the dialogue model is reliable, output the response information, and in response to the detection result indicating that the response information output by the dialogue model is unreliable, output corresponding prompt information.

17. An electronic device, comprising: a memory and a processor, wherein the memory is configured to store computer-executable instructions, the processor is configured to execute the computer-executable instructions, and when the computer-executable instructions are executed by the processor, steps of the information detection method as claimed in any one of claims 1 to 12, 14 and 15 are performed, or steps of the information generation method as claimed in claim 13 are performed.

18. A computer-readable storage medium, wherein the computer-readable storage medium stores an executable program, and when the executable program is run, a device in which the computer-readable storage medium is located is controlled to perform the information detection method as claimed in any one of claims 1 to 12, 14 and 15, or the information generation method as claimed in claim 13.

19. A computer program product, comprising a computer program, wherein when the computer program is executed by a processor, the information detection method as claimed in any one of claims 1 to 12, 14 and 15 is performed, or the information generation method claimed in claim 13 is performed.

20. A computer program product, comprising a non-transitory computer-readable storage medium, wherein the non-transitory computer-readable storage medium stores a computer program, and when the computer program is executed by a processor, the information detection method as claimed in any one of claims 1 to 12, 14 and 15 is performed, or the information generation method as claimed in claim 13 is performed.
